# EUROPÄISCHE PATENTANMELDUNG

(11) **EP 4 047 686 A1**
(43) Veröffentlichungstag der Anmeldung: **24.08.2022**
(21) Anmeldenummer: 22154941.3
(22) Anmeldetag: 03.02.2022
(51) Int. Cl.: H01M 4/36, H01M 4/64, H01M 50/105, H01M 50/553, H01M 50/557, H01M 50/178

(54) **BATTERIEZELLE**

(30) Priorität: 19.02.2021 DE 102021103991
(71) Anmelder: VOLKSWAGEN AG, 38440 Wolfsburg (DE)
(72) Erfinder: Schwieters, Timo Paul, 38102 Braunschweig (DE); Kunze, Miriam, 30926 Seelze (DE)
(74) Vertreter: karo IP

(57) **Zusammenfassung**

Batteriezelle (1), zumindest umfassend ein Gehäuse (2) und darin angeordnet eine Mehrzahl von Elektrodenfolien (3, 4, 5, 6) und dazwischen angeordnete Separatormaterialien (7); wobei die Mehrzahl von Elektrodenfolien (3, 4, 5, 6) zumindest zwei erste Elektrodenfolien (3, 4) einer ersten Elektrodenart (8), also einer Anode oder einer Kathode und mindestens eine zweite Elektrodenfolie (5, 6) einer, sich von der ersten Elektrodenart (8) unterscheidenden zweiten Elektrodenart (9), also einer Kathode oder einer Anode, umfasst; wobei jede der Elektrodenfolien (3, 4, 5, 6) über jeweils mindestens einen Stromsammler (10) mit jeweils einem, sich durch das Gehäuse (2) nach außen erstreckenden Stromanschluss (11, 12, 13, 14) der Batteriezelle (1) verbunden ist; wobei die Batteriezelle (1) mindestens drei Stromanschlüsse (11, 12, 13, 14) aufweist, über die die Batteriezelle (1) an einen Stromkreis (15) anschließbar ist.

## Beschreibung

Die Erfindung betrifft eine Batteriezelle.

Insbesondere umfasst die Batteriezelle ein Gehäuse und darin angeordnet eine Mehrzahl von Elektrodenfolien und dazwischen angeordnete Separatormaterialien. Das Gehäuse ist insbesondere ein elastisch verformbares, gasdicht ausgeführtes Gehäuse, wobei darin ein Stapel aufeinander angeordneter Elektrodenfolien angeordnet ist.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist. In einer Batteriezelle sind Elektrodenfolien, also Anoden und Kathoden aufeinander gestapelt angeordnet, wobei unterschiedliche Elektrodenfolien durch Separatorfolien oder ein Separatormaterial voneinander getrennt angeordnet sind. Die Elektrodenfolien sind in einem Elektrolyt angeordnet.

Es sind z. B. Batteriezellen mit flüssigen oder festen Elektrolyten (Feststoffbatterie) bekannt.

Ein Batteriemodul umfasst insbesondere eine Mehrzahl von Batteriezellen, die miteinander elektrisch in Reihe oder parallel-geschaltet und in einem Modulgehäuse angeordnet sind. Auch einzelne Batteriemodule können miteinander elektrisch in Reihe oder parallel-geschaltet werden. Eine Batterie umfasst ein Batteriemodul oder eine Mehrzahl von Batteriemodulen.

Es sind Batteriezellen mit unterschiedlichen Kathodenmaterialien und/ oder Anodenmaterialien bekannt, wobei diese Paare aus Kathoden und Anoden einer Batteriezelle zueinander parallelgeschaltet angeordnet sind. Die Aktivmaterialien können insbesondere einerseits hinsichtlich einer hohen Energiedichte (also zur Speicherung einer größeren Menge an Energie) bei geringer Leistungsbereitstellung (also geringere Abgaberate der gespeicherten Energie) oder andererseits hinsichtlich einer niedrigeren Energiedichte aber dafür höherer Leistungsbereitstellung ausgewählt werden.

Es sind auch Dual-Battery Systeme bekannt, in denen zwei unterschiedliche Batteriezellen z. B. innerhalb eines Batteriemoduls zum Einsatz kommen. Jeweils eine Zellart erfüllt dann entweder die Leistungs- oder die Energiedichteanforderung. Das Dual-Battery System verhindert allerdings den Einsatz von Gleichteilen.

Aus der US 2009/0117457 A1 ist eine Batteriezelle mit unterschiedlichen Kathodenmaterialien bekannt. Die unterschiedlichen Materialien (erstes Material: hohe Leistung, niedrige Energiedichte; zweites Material: geringe Leistung, hohe Energiedichte) ermöglichen ein breiteres Anwendungsspektrum für Batteriezellen. Die unterschiedlichen Kathodenmaterialien sind miteinander parallelgeschaltet in der Batteriezelle angeordnet und werden über einen gemeinsamen Ableiter der Batteriezelle elektrisch kontaktiert.

Aus der US 2016/0006033 A1 ist eine Batteriezelle mit unterschiedlichen Kathodenmaterialien und unterschiedlichen Anodenmaterialien bekannt. Die unterschiedlichen Materialien einer Elektrode sind auf, einander gegenüberliegenden Seiten jeweils eines gemeinsamen Stromsammlers angeordnet. Der verwendete Elektrolyt der Batteriezelle kann fest oder auch flüssig sein. Die unterschiedlichen Elektrodenmaterialien sind miteinander parallelgeschaltet in der Batteriezelle angeordnet und werden über einen gemeinsamen Ableiter der Batteriezelle elektrisch kontaktiert.

Aus der US 2003/0129485 A1 ist eine Batteriezelle mit unterschiedlichen Kathodenmaterialien bekannt. Die unterschiedlichen Elektrodenmaterialien sind miteinander parallelgeschaltet in der Batteriezelle angeordnet und werden über einen gemeinsamen Ableiter der Batteriezelle elektrisch kontaktiert.

Aufgabe der vorliegenden Erfindung ist es, die mit Bezug auf den Stand der Technik angeführten Probleme zumindest teilweise zu lösen. Insbesondere soll eine Batteriezelle vorgeschlagen werden, die einerseits dem Gebot der Gleichteileverwendung entspricht und andererseits eine hohe Effektivität im Betrieb aufweist.

Zur Lösung dieser Aufgaben trägt eine Batteriezelle mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Batteriezelle vorgeschlagen, zumindest umfassend ein Gehäuse und darin angeordnet eine Mehrzahl von Elektrodenfolien und dazwischen angeordnete Separatormaterialien. Die Mehrzahl von Elektrodenfolien umfasst zumindest zwei erste Elektrodenfolien einer ersten Elektrodenart, also einer Anode oder einer Kathode und mindestens eine zweite Elektrodenfolie einer, sich von der ersten Elektrodenart unterscheidenden zweiten Elektrodenart, also einer Kathode oder einer Anode. Jede der Elektrodenfolien ist über jeweils mindestens einen Stromsammler mit jeweils einem, sich durch das Gehäuse nach außen erstreckenden Stromanschluss der Batteriezelle verbunden. Die Batteriezelle weist mindestens drei Stromanschlüsse auf, über die die Batteriezelle an einen Stromkreis anschließbar ist. Zumindest die ersten Elektrodenfolien weisen voneinander unterschiedlich ausgeführte Aktivmaterialien auf und eine erste Folie der ersten Elektrodenfolien ist mit einem ersten Stromanschluss, eine zweite Folie der ersten Elektrodenfolien mit einem zweiten Stromanschluss und die zweite Elektrodenfolie mit einem dritten Stromanschluss elektrisch leitend verbunden.

Die Batteriezelle ist insbesondere eine Pouchzelle (mit einem verformbaren Gehäuse bestehend aus einer Pouchfolie) oder eine prismatische Zelle (mit einem formfesten Gehäuse). Eine Pouchfolie ist ein bekanntes verformbares Gehäuseteil, dass als Gehäuse für sogenannte Pouchzellen eingesetzt wird. Es handelt sich dabei um ein Kompositmaterial, z. B. umfassend einen Kunststoff und Aluminium.

Innerhalb der Batteriezelle sind insbesondere keine weiteren Gehäuse vorgesehen, in denen einzelne Gruppen von Elektrodenfolien angeordnet sind. Die Elektrodenfolien werden also insbesondere nur von einem gemeinsamen Gehäuse umschlossen. Das Gehäuse ist insbesondere flüssigkeitsdicht, ggf. gasdicht ausgeführt. Innerhalb des Gehäuses ist insbesondere ein flüssiger Elektrolyt angeordnet, es kann aber auch ein fester oder gelförmiger Elektrolyt vorgesehen sein.

Die Batteriezelle ist insbesondere eine Lithium-Ionen-Batteriezelle.

Die einzelnen Folien der Mehrzahl von Elektrodenfolien sind aufeinander angeordnet und bilden insbesondere einen Stapel. Dabei sind Anoden und Kathoden wechselweise und jeweils durch ein Separatormaterial getrennt voneinander angeordnet.

Insbesondere wird eine Elektrodenfolien durch einen (metallischen) Stromsammler, insbesondere eine Folie, ausgebildet, der insbesondere auf seinen größten, einander gegenüberliegenden, Seitenflächen mit einem Aktivmaterial beschichtet ist.

Vorliegend wird vorgeschlagen, dass die Batteriezelle mindestens drei Stromanschlüsse aufweist, über die die Batteriezelle mit einem batteriezellenexternen Stromkreis elektrisch leitend verbindbar ist. Insbesondere sind also zwei verschiedene Anschlussmöglichkeiten für die Batteriezelle möglich. Zum einen kann die Batteriezelle über den ersten und den dritten Stromanschluss an einen Stromkreis angeschlossen werden, so dass nur über die darüber angeschlossene erste Folie der ersten Elektrodenfolie und die zweite Elektrodenfolie ein Entlade- oder Ladevorgang der Batteriezelle erfolgen kann. Zum anderen kann die Batteriezelle über den zweiten und den dritten Stromanschluss an einen Stromkreis angeschlossen werden, so dass nur über die darüber angeschlossene zweite Folie der ersten Elektrodenfolie und die zweite Elektrodenfolie ein Entlade- oder Ladevorgang der Batteriezelle erfolgen kann.

Es wird also nicht auf die innerhalb der Batteriezelle selbstständig ablaufenden Vorgänge zum Laden oder Entladen zurückgegriffen, sondern es wird eine gezielte Verschaltung der Batteriezelle ermöglicht, so dass ausschließlich nur ausgewählte und bestimmte Charakteristika aufweisende Bestandteile der Batteriezelle für einen Betrieb der Batteriezelle genutzt werden.

Insbesondere kann so eine Effektivität der Nutzung der Batteriezelle erhöht werden, wobei eine Schädigung einzelner Komponenten der Batteriezelle durch eine auf die jeweilige Komponente abgestimmte Nutzung verhindert werden kann.

Insbesondere können eine Vielzahl von ersten Elektrodenfolien und zweiten Elektrodenfolien vorgesehen sein, die dann in Abhängigkeit von ihrer Art (Anode oder Kathode) und ihres Aktivmaterials in der beschriebenen Weise mit einem der drei Stromanschlüsse verbunden sind.

Insbesondere umfasst die Batteriezelle zumindest zwei zweite Elektrodenfolien mit voneinander unterschiedlich ausgeführten Aktivmaterialien (ggf. auch drei oder mehr zweite Elektrodenfolien, die jeweils unterschiedlich ausgeführte Aktivmaterialien aufweisen). Insbesondere weist die Batteriezelle mindestens vier Stromanschlüsse auf, wobei eine dritte Folie der zweiten Elektrodenfolien mit dem dritten Stromanschluss und eine vierte Folie der zweiten Elektrodenfolien mit einem vierten Stromanschluss elektrisch leitend verbunden ist. Insbesondere können für eine Anode und/ oder eine Kathode voneinander unterschiedlich ausgeführte Aktivmaterialien vorgesehen sein.

Insbesondere umfasst das unterschiedlich ausgeführte Aktivmaterial zumindest, dass
- eine (z. B. chemische) Zusammensetzung des Aktivmaterials; oder
- zumindest eine Porosität oder Schichtdicke des Aktivmaterials (also physikalische Eigenschaften)
voneinander unterschiedlich ausgeführt ist.

Insbesondere sind alle Elektrodenfolien mit gleich ausgeführten Aktivmaterialien mit jeweils einem gemeinsamen Stromanschluss elektrisch leitend verbunden.

Insbesondere ist (jeweils) eine Elektrodenfolie mit mindestens zwei Stromanschlüssen elektrisch leitend verbunden. Dieses Prinzip der "dual tab" Anbindung ist grundsätzlich zur Verringerung eines Innenwiderstands bekannt. Damit ist ein noch effektiverer Betrieb der Batteriezelle möglich.

Insbesondere umfasst zumindest eine Elektrodenfolie einen beidseitig mit Aktivmaterial beschichteten Stromsammler, wobei die Aktivmaterialien voneinander unterschiedlich ausgeführt sind.

Es wird weiter ein Verfahren zur Ansteuerung der beschriebenen Batteriezelle vorgeschlagen, zumindest umfassend einen der folgenden Schritte:
a) Laden oder Entladen der Batteriezelle über den ersten Stromanschluss und den dritten Stromanschluss; oder
b) Laden oder Entladen der Batteriezelle über den zweiten Stromanschluss und den dritten Stromanschluss.

Vorliegend wird vorgeschlagen, dass die Batteriezelle mindestens drei Stromanschlüsse aufweist, über die die Batteriezelle mit einem batteriezellenexternen Stromkreis zum Laden und/ oder Entladen elektrisch leitend verbunden ist. Insbesondere sind also zwei verschiedene Anschlussmöglichkeiten für die Batteriezelle möglich. Im Rahmen einer ersten Betriebsart ist die Batteriezelle über den ersten und den dritten Stromanschluss an einen Stromkreis angeschlossen, so dass nur über die darüber angeschlossene erste Folie der ersten Elektrodenfolie und die zweite Elektrodenfolie ein Entlade- oder Ladevorgang der Batteriezelle erfolgt. Im Rahmen einer zweiten Betriebsart ist die Batteriezelle über den zweiten und den dritten Stromanschluss an einen Stromkreis angeschlossen, so dass nur über die darüber angeschlossene zweite Folie der ersten Elektrodenfolie und die zweite Elektrodenfolie ein Entlade- oder Ladevorgang der Batteriezelle erfolgt.

Insbesondere umfasst die Batteriezelle zumindest zwei zweite Elektrodenfolien mit voneinander unterschiedlich ausgeführten Aktivmaterialien. Insbesondere weist die Batteriezelle mindestens vier Stromanschlüsse auf, wobei eine dritte Folie der zweiten Elektrodenfolien mit dem dritten Stromanschluss und eine vierte Folie der zweiten Elektrodenfolien mit einem vierten Stromanschluss elektrisch leitend verbunden ist. Das Verfahren umfasst zusätzlich zumindest einen der folgenden Schritte:
c) Laden oder Entladen der Batteriezelle über den ersten Stromanschluss und den vierten Stromanschluss; oder
d) Laden oder Entladen der Batteriezelle über den zweiten Stromanschluss und den vierten Stromanschluss.

Insbesondere sind dann also mindestens zwei zusätzliche Anschlussmöglichkeiten für die Batteriezelle möglich. Im Rahmen einer dritten Betriebsart ist die Batteriezelle über den ersten und den vierten Stromanschluss an einen Stromkreis angeschlossen, so dass nur über die darüber angeschlossene erste Folie (der ersten Elektrodenfolie) und die vierte Folie (der zweiten Elektrodenfolie) ein Entlade- oder Ladevorgang der Batteriezelle erfolgt. Im Rahmen einer vierten Betriebsart ist die Batteriezelle über den zweiten und den vierten Stromanschluss an einen Stromkreis angeschlossen, so dass nur über die darüber angeschlossene zweite Folie (der ersten Elektrodenfolie) und die vierte Folie (der zweiten Elektrodenfolie) ein Entlade- oder Ladevorgang der Batteriezelle erfolgt.

Es wird weiter eine Batterieanordnung vorgeschlagen, zumindest umfassend mindestens die beschriebene Batteriezelle, einen Stromkreis sowie ein Steuergerät, das zur Durchführung des beschriebenen Verfahrens eingerichtet ist, wobei durch das Steuergerät der Stromkreis über die jeweiligen Stromanschlüsse schaltbar schließbar ist.

Über das Steuergerät kann die Batteriezelle also insbesondere in einer ausgewählten Betriebsart (mindestens erste bis vierte Betriebsart) zumindest zeitweise betrieben werden. Dabei können Randbedingungen durch das Steuergerät erkannt bzw. berücksichtigt werden (z. B. ob eine hohe oder niedrige Lade- oder Entladerate gefordert ist).

Es wird ein Steuergerät vorgeschlagen, das zur Durchführung des Verfahrens nach einem der vorhergehenden Patentansprüche ausgestattet, konfiguriert oder programmiert ist.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Es wird weiter ein Kraftfahrzeug vorgeschlagen, zumindest umfassend die beschriebene Batterieanordnung und einen Traktionsantrieb zum Antrieb des Kraftfahrzeuges, wobei der Traktionsantrieb durch die mindestens eine Batteriezelle mit Energie versorgbar ist.

Die Ausführungen zu der Batteriezelle sind insbesondere auf das Verfahren, die Batterieanordnung, das Steuergerät und/oder das computerimplementierte Verfahren (also den Computer bzw. den Prozessor, das System zur Datenverarbeitung, das computerlesbare Speichermedium) und das Kraftfahrzeug übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Kraftfahrzeug mit einem Traktionsantrieb und einer Batterieanordnung;
- Fig. 2:: eine erste Ausführungsvariante einer Batteriezelle in einer perspektivischen Ansicht;
- Fig. 3:: eine zweite Ausführungsvariante einer Batteriezelle in einer perspektivischen Ansicht;
- Fig. 4:: eine dritte Ausführungsvariante einer Batteriezelle in einer perspektivischen Ansicht;
- Fig. 5:: eine vierte Ausführungsvariante einer Batteriezelle in einer perspektivischen Ansicht;
- Fig. 6:: eine fünfte Ausführungsvariante einer Batteriezelle in einer perspektivischen Ansicht;
- Fig. 7:: eine sechste Ausführungsvariante einer Batteriezelle in einer perspektivischen Ansicht;
- Fig. 8:: eine Batteriezelle in einer perspektivischen Ansicht; und
- Fig. 9:: einen Ausschnitt der Batteriezelle nach Fig. 8.

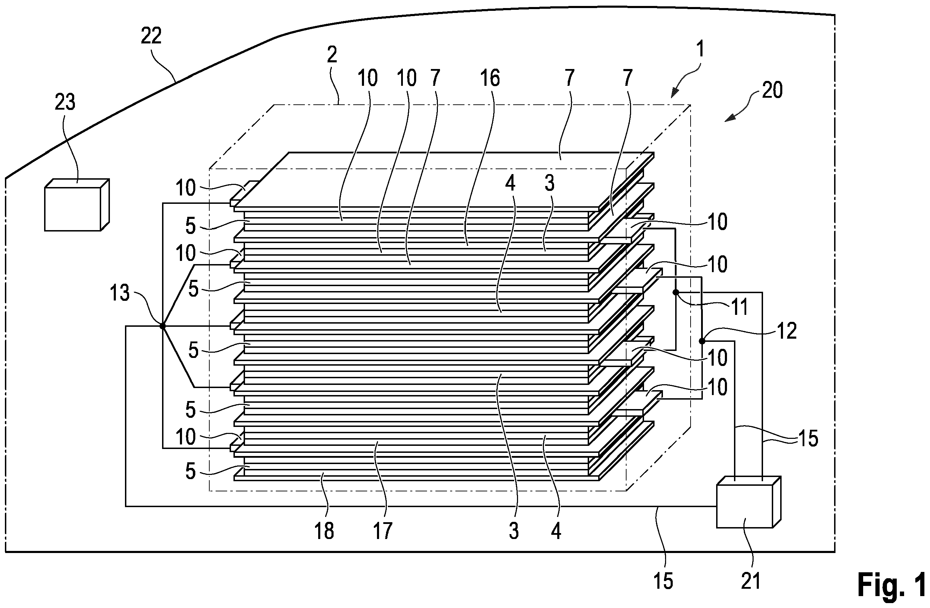

Die Fig. 1 zeigt ein Kraftfahrzeug 22 mit einem Traktionsantrieb 23 und einer Batterieanordnung 20. Die Batterieanordnung 20 umfasst eine Batteriezelle 1, einen Stromkreis 15 sowie ein Steuergerät 21, wobei durch das Steuergerät 21 der Stromkreis 15 über die jeweiligen Stromanschlüsse 11, 12, 13 der Batteriezelle 1 schaltbar schließbar ist.

Die Batteriezelle 1 umfasst ein Gehäuse 2 und darin angeordnet eine Mehrzahl von Elektrodenfolien 3, 4, 5 und dazwischen angeordnete Separatormaterialien 7. Die Mehrzahl von Elektrodenfolien 3, 4, 5 umfasst zumindest vier erste Elektrodenfolien 3, 4 einer ersten Elektrodenart 8, hier einer Kathode, und fünf zweite Elektrodenfolie 5 einer, sich von der ersten Elektrodenart 8 unterscheidenden zweiten Elektrodenart 9, hier einer Anode. Jede der Elektrodenfolien 3, 4, 5 ist über jeweils einen Stromsammler 10 mit jeweils einem, sich durch das Gehäuse 2 nach außen erstreckenden Stromanschluss 11, 12, 13 der Batteriezelle 1 verbunden. Die Batteriezelle 1 weist drei Stromanschlüsse 11, 12, 13 auf, über die die Batteriezelle 1 an einen Stromkreis 15 anschließbar ist. Die ersten Elektrodenfolien 3, 4 weisen voneinander unterschiedlich ausgeführte Aktivmaterialien 16, 17 auf und zwei erste Folien 3 der ersten Elektrodenfolien 3, 4 sind mit einem ersten Stromanschluss 11, zwei zweite Folien 4 der ersten Elektrodenfolien 3, 4 mit einem zweiten Stromanschluss 12 und die vier zweiten Elektrodenfolien 5 sind mit einem dritten Stromanschluss 13 elektrisch leitend verbunden.

Die Batteriezelle 1 ist eine Pouchzelle mit einem verformbaren Gehäuse 2 bestehend aus einer Pouchfolie. Die Elektrodenfolien 3, 4, 5 werden nur von einem gemeinsamen Gehäuse 2 umschlossen. Das Gehäuse 2 ist flüssigkeitsdicht und gasdicht ausgeführt. Innerhalb des Gehäuses 2 ist ein flüssiger Elektrolyt (nicht separat gekennzeichnet) angeordnet.

Die einzelnen Folien 3, 4, 5 der Mehrzahl von Elektrodenfolien 3, 4, 5 sind aufeinander angeordnet und bilden einen Stapel. Dabei sind Anoden und Kathoden wechselweise und jeweils durch ein Separatormaterial 7 getrennt voneinander angeordnet.

Eine Elektrodenfolie 3, 4, 5 wird durch einen (metallischen) Stromsammler 10, eine Folie, ausgebildet, der auf seinen größten, einander gegenüberliegenden, Seitenflächen mit einem Aktivmaterial 16, 17, 18 beschichtet ist.

Die Batteriezelle 1 weist drei Stromanschlüsse 11, 12, 13 auf, über die die Batteriezelle 1 mit einem batteriezellenexternen Stromkreis 15 elektrisch leitend verbunden ist. Es sind zwei verschiedene Anschlussmöglichkeiten bzw. Betriebsarten für die Batteriezelle 1 möglich. Zum einen kann die Batteriezelle 1 über den ersten Stromanschluss 11 und den dritten Stromanschluss 13 an einen Stromkreis 15 angeschlossen werden, so dass nur über die darüber angeschlossene erste Folie 3 der ersten Elektrodenfolie 3, 4 und die zweite Elektrodenfolie 5 ein Entlade- oder Ladevorgang der Batteriezelle 1 erfolgen kann (gemäß Schritt a) des Verfahrens). Zum anderen kann die Batteriezelle 1 über den zweiten Stromanschluss 12 und den dritten Stromanschluss 13 an einen Stromkreis 15 angeschlossen werden, so dass nur über die darüber angeschlossene zweite Folie 4 der ersten Elektrodenfolie 3, 4 und die zweite Elektrodenfolie 5 ein Entlade- oder Ladevorgang der Batteriezelle 1 erfolgen kann (gemäß Schritt b) des Verfahrens).

Alle Elektrodenfolien 3, 4, 5 mit gleich ausgeführten Aktivmaterialien 16, 17, 18 sind mit jeweils einem gemeinsamen Stromanschluss 11, 12, 13 elektrisch leitend verbunden.

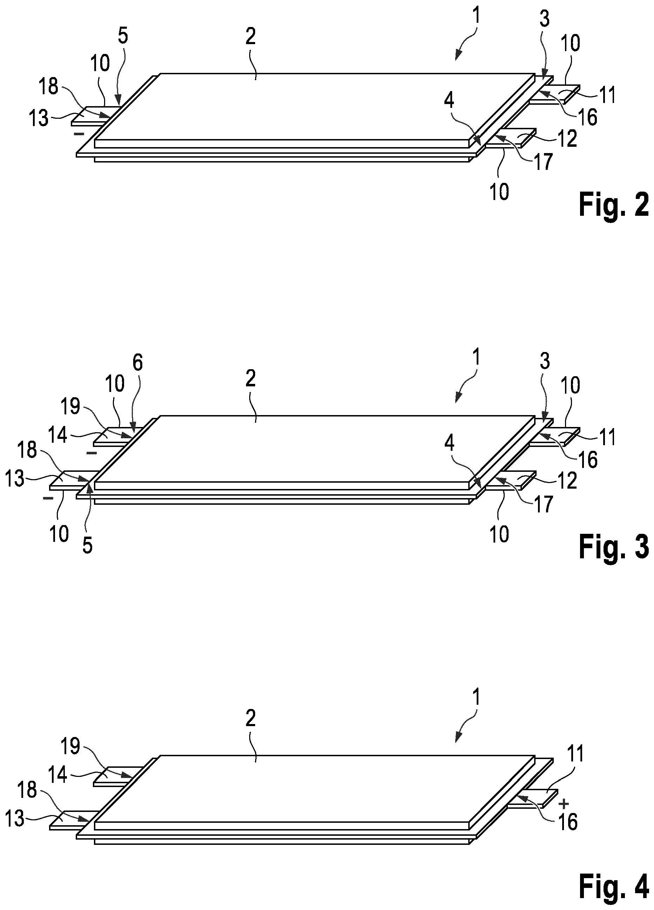

Fig. 2 zeigt eine erste Ausführungsvariante einer Batteriezelle 1 in einer perspektivischen Ansicht. Auf die Ausführungen zu Fig. 1 wird verwiesen.

Die ersten Elektrodenfolien 3, 4 sind einer ersten Elektrodenart 8, hier einer Kathode, und die zweiten Elektrodenfolie 5 einer, sich von der ersten Elektrodenart 8 unterscheidenden zweiten Elektrodenart 9, hier einer Anode, zugeordnet. Jede der Elektrodenfolien 3, 4, 5 ist über jeweils einen Stromsammler 10 mit jeweils einem, sich durch das Gehäuse 2 nach außen erstreckenden Stromanschluss 11, 12, 13 der Batteriezelle 1 verbunden. Die Batteriezelle 1 weist drei Stromanschlüsse 11, 12, 13 auf, über die die Batteriezelle 1 an einen Stromkreis 15 anschließbar ist. Die ersten Elektrodenfolien 3, 4 weisen voneinander unterschiedlich ausgeführte Aktivmaterialien 16, 17 auf. Die ersten Folien 3 mit einem ersten Aktivmaterial 16 sind mit einem ersten Stromanschluss 11, die zweiten Folien 4 mit einem zweiten Aktivmaterial 17 mit einem zweiten Stromanschluss 12 und die zweiten Elektrodenfolien 5 mit einem dritten Aktivmaterial 18 sind mit einem dritten Stromanschluss 13 elektrisch leitend verbunden. Damit können über den ersten Stromanschluss 11 und den zweiten Stromanschluss 12 die Kathoden und über den dritten Stromanschluss 13 die Anoden an den Stromkreis 15 angeschlossen werden.

Fig. 3 zeigt eine zweite Ausführungsvariante einer Batteriezelle 1 in einer perspektivischen Ansicht. Auf die Ausführungen zu den Fig. 1 und 2 wird verwiesen.

Die Batteriezelle 1 umfasst neben den zwei unterschiedlichen ersten Elektrodenfolien 3, 4 auch zwei unterschiedliche zweite Elektrodenfolien 5, 6 mit voneinander unterschiedlich ausgeführten Aktivmaterialien 16, 17, 18, 19 auf. Die Batteriezelle 1 weist vier Stromanschlüsse 11, 12, 13, 14 auf, wobei dritte Folien 5 der zweiten Elektrodenfolien 5, 6 mit dem dritten Stromanschluss 13 und vierte Folien 6 der zweiten Elektrodenfolien 5, 6 mit einem vierten Stromanschluss 14 elektrisch leitend verbunden sind. Es sind also für die Anoden und die Kathoden voneinander unterschiedlich ausgeführte Aktivmaterialien 16, 17, 18, 19 vorgesehen

Gemäß Schritt c) des Verfahrens erfolgt ein Laden oder Entladen der Batteriezelle 1 über den ersten Stromanschluss 11 und den vierten Stromanschluss 14. Gemäß Schritt d) des Verfahrens erfolgt ein Laden oder Entladen der Batteriezelle 1 über den zweiten Stromanschluss 12 und den vierten Stromanschluss 14.

Fig. 4 zeigt eine dritte Ausführungsvariante einer Batteriezelle 1 in einer perspektivischen Ansicht. Auf die Ausführungen zu den Fig. 1 und 2 wird verwiesen.

Im Unterschied zur ersten Ausführungsvariante (siehe Fig. 2) sind hier zwei Stromanschlüsse 13, 14 für die (unterschiedlich ausgeführtes Aktivmaterial 18, 19 aufweisenden) Anoden und nur ein Stromanschluss 11 für die (gleich ausgeführtes Aktivmaterial 16 aufweisenden) Kathoden vorgesehen.

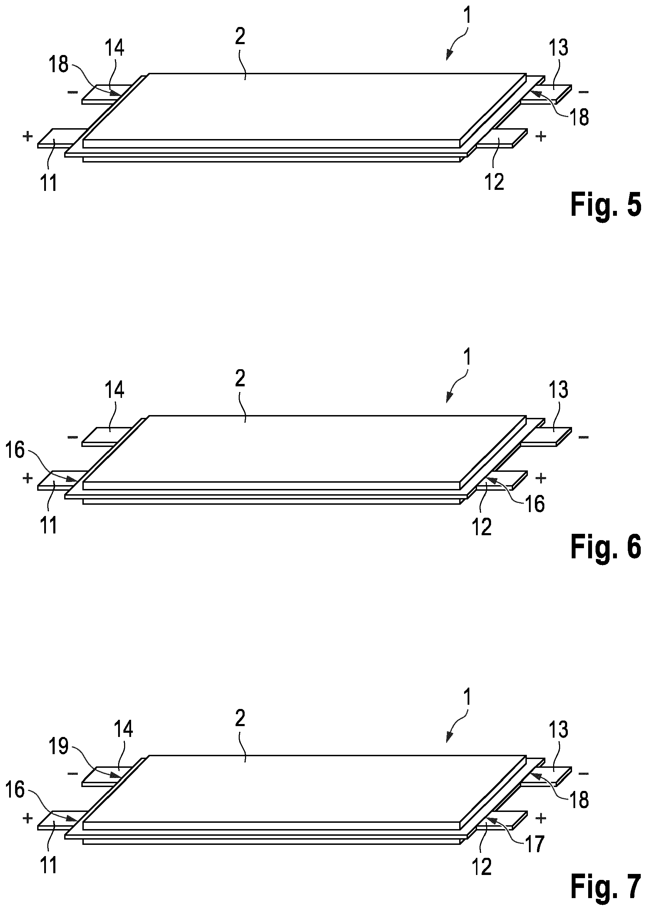

Fig. 5 zeigt eine vierte Ausführungsvariante einer Batteriezelle 1 in einer perspektivischen Ansicht. Auf die Ausführungen zu den Fig. 1 und 2 wird verwiesen.

Im Unterschied zur ersten Ausführungsvariante (siehe Fig. 2) sind hier zwei Stromanschlüsse 13, 14 für die gleich ausgeführtes Aktivmaterial 18 aufweisenden Anoden vorgesehen. Hier ist jede Elektrodenfolie 5, 6 der Anode mit jeweils zwei Stromanschlüssen 13, 14 elektrisch leitend verbunden. Dieses Prinzip der "dual tab" Anbindung ist grundsätzlich zur Verringerung eines Innenwiderstands bekannt. Damit ist ein noch effektiverer Betrieb der Batteriezelle 1 möglich.

Fig. 6 zeigt eine fünfte Ausführungsvariante einer Batteriezelle 1 in einer perspektivischen Ansicht. Auf die Ausführungen zu Fig. 5 wird verwiesen.

Im Unterschied zur vierten Ausführungsvariante (siehe Fig. 5) sind hier jeweils zwei Stromanschlüsse 11, 12 für jede Kathode vorgesehen, wobei die Kathoden gleich ausgeführtes Aktivmaterial 16 aufweisen.

Fig. 7 zeigt eine sechste Ausführungsvariante einer Batteriezelle 1 in einer perspektivischen Ansicht. Auf die Ausführungen zu Fig. 3 wird verwiesen.

Im Unterschied zur zweiten Ausführungsvariante sind hier die Stromanschlüsse 11, 12, 13, 14 der Anoden und Kathoden anders angeordnet. So sind auf jeweils einer Seite der Batteriezelle 1 jeweils ein erster bzw. zweiter Stromanschluss 11, 12 einer Kathode und ein dritter bzw. vierter Stromanschluss 13, 14 einer Anode angeordnet.

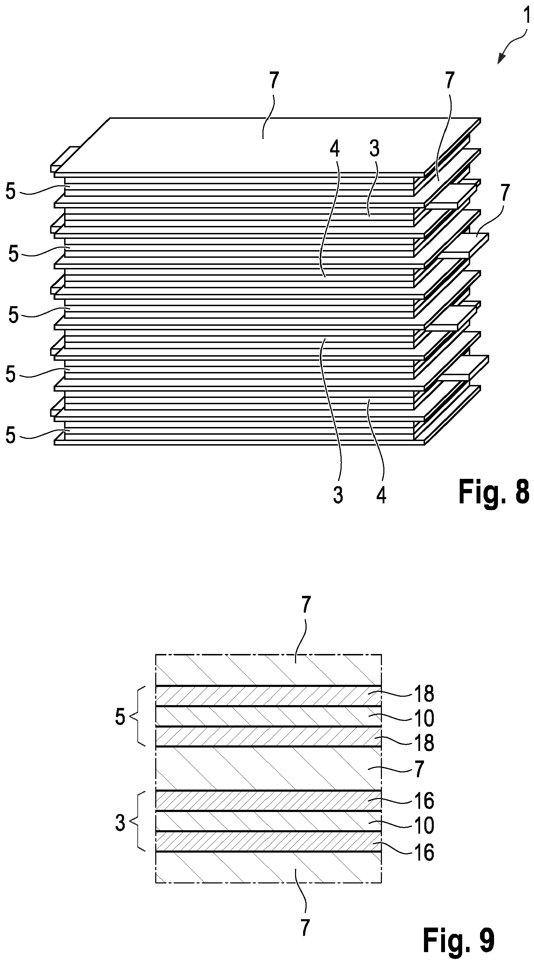

Fig. 8 zeigt eine Batteriezelle 1 in einer perspektivischen Ansicht. Fig. 9 zeigt einen Ausschnitt der Batteriezelle 1 nach Fig. 8. Auf die Ausführungen zu Fig. 1 und 2 wird Bezug genommen.

Die einzelnen Folien 3, 4, 5 der Mehrzahl von Elektrodenfolien 3, 4, 5 sind aufeinander angeordnet und bilden einen Stapel. Dabei sind Anoden und Kathoden wechselweise und jeweils durch ein Separatormaterial 7 getrennt voneinander angeordnet.

Eine Elektrodenfolie 3, 4, 5 wird durch einen (metallischen) Stromsammler 10, eine Folie, ausgebildet, der auf seinen größten, einander gegenüberliegenden, Seitenflächen mit einem Aktivmaterial 16, 17, 18 beschichtet ist.

### Bezugszeichenliste

- 1: Batteriezelle
- 2: Gehäuse
- 3: erste Folie (einer ersten Elektrodenfolie)
- 4: zweite Folie (einer ersten Elektrodenfolie)
- 5: dritte Folie (einer zweiten Elektrodenfolie)
- 6: vierte Folie (einer zweiten Elektrodenfolie)
- 7: Separatormaterial
- 8: erste Elektrodenart
- 9: zweite Elektrodenart
- 10: Stromsammler
- 11: erster Stromanschluss
- 12: zweiter Stromanschluss
- 13: dritter Stromanschluss
- 14: vierter Stromanschluss
- 15: Stromkreis
- 16: erstes Aktivmaterial
- 17: zweites Aktivmaterial
- 18: drittes Aktivmaterial
- 19: viertes Aktivmaterial
- 20: Batterieanordnung
- 21: Steuergerät
- 22: Kraftfahrzeug
- 23: Traktionsantrieb

## Patentansprüche

1. Batteriezelle (1), zumindest umfassend ein Gehäuse (2) und darin angeordnet eine Mehrzahl von Elektrodenfolien (3, 4, 5, 6) und dazwischen angeordnete Separatormaterialien (7); wobei die Mehrzahl von Elektrodenfolien (3, 4, 5, 6) zumindest zwei erste Elektrodenfolien (3, 4) einer ersten Elektrodenart (8), also einer Anode oder einer Kathode und mindestens eine zweite Elektrodenfolie (5, 6) einer, sich von der ersten Elektrodenart (8) unterscheidenden zweiten Elektrodenart (9), also einer Kathode oder einer Anode, umfasst; wobei jede der Elektrodenfolien (3, 4, 5, 6) über jeweils mindestens einen Stromsammler (10) mit jeweils einem, sich durch das Gehäuse (2) nach außen erstreckenden Stromanschluss (11, 12, 13, 14) der Batteriezelle (1) verbunden ist; wobei die Batteriezelle (1) mindestens drei Stromanschlüsse (11, 12, 13, 14) aufweist, über die die Batteriezelle (1) an einen Stromkreis (15) anschließbar ist; wobei zumindest die ersten Elektrodenfolien (3, 4) voneinander unterschiedlich ausgeführte Aktivmaterialien (16, 17) aufweisen und eine erste Folie (3) der ersten Elektrodenfolien (3, 4) mit einem ersten Stromanschluss (11), eine zweite Folie (4) der ersten Elektrodenfolien (3, 4) mit einem zweiten Stromanschluss (12) und die zweite Elektrodenfolie (5, 6) mit einem dritten Stromanschluss (13) elektrisch leitend verbunden ist.

2. Batteriezelle (1) nach Patentanspruch 1, zumindest umfassend zwei zweite Elektrodenfolien (5, 6) mit voneinander unterschiedlich ausgeführten Aktivmaterialien (18, 19); wobei die Batteriezelle (1) mindestens vier Stromanschlüsse (11, 12, 13, 14) aufweist, wobei eine dritte Folie (5) der zweiten Elektrodenfolien (5, 6) mit dem dritten Stromanschluss (13) und eine vierte Folie (6) der zweiten Elektrodenfolien (5, 6) mit einem vierten Stromanschluss (14) elektrisch leitend verbunden ist.

3. Batteriezelle (1) nach einem der vorhergehenden Patentansprüche, wobei das unterschiedlich ausgeführte Aktivmaterial (16, 17, 18, 19) zumindest umfasst, dass
• eine Zusammensetzung des Aktivmaterials (16, 17, 18, 19); oder
• zumindest eine Porosität oder Schichtdicke des Aktivmaterials (16, 17, 18, 19) voneinander unterschiedlich ausgeführt ist.

4. Batteriezelle (1) nach einem der vorhergehenden Patentansprüche, wobei alle Elektrodenfolien (3, 4, 5, 6) mit gleich ausgeführten Aktivmaterialien (16, 17, 18, 19) mit einem gemeinsamen Stromanschluss (11, 12, 13, 14) elektrisch leitend verbunden sind.

5. Batteriezelle (1) nach einem der vorhergehenden Patentansprüche, wobei eine Elektrodenfolie (3, 4, 5, 6) mit mindestens zwei Stromanschlüssen (11, 12, 13, 14) elektrisch leitend verbunden ist.

6. Batteriezelle (1) nach einem der vorhergehenden Patentansprüche, wobei zumindest eine Elektrodenfolie (3, 4, 5, 6) einen beidseitig mit Aktivmaterial (16, 17, 18, 19) beschichteten Stromsammler (10) umfasst, wobei die Aktivmaterialien (16, 17, 18, 19) voneinander unterschiedlich ausgeführt sind.

7. Verfahren zur Ansteuerung einer Batteriezelle (1) nach einem der vorhergehenden Patentansprüche, zumindest umfassend einen der folgenden Schritte:
a) Laden oder Entladen der Batteriezelle (1) über den ersten Stromanschluss (11) und den dritten Stromanschluss (13); oder
b) Laden oder Entladen der Batteriezelle (1) über den zweiten Stromanschluss (12) und den dritten Stromanschluss (13).

8. Verfahren nach Patentanspruch 7, wobei die Batteriezelle (1) zumindest zwei zweite Elektrodenfolien (5, 6) mit voneinander unterschiedlich ausgeführten Aktivmaterialien (18, 19) umfasst; wobei die Batteriezelle (1) mindestens vier Stromanschlüsse (11, 12, 13, 14) aufweist, wobei eine dritte Folie (5) der zweiten Elektrodenfolien (5, 6) mit dem dritten Stromanschluss (13) und eine vierte Folie (6) der zweiten Elektrodenfolien (5, 6) mit einem vierten Stromanschluss (14) elektrisch leitend verbunden ist; wobei das Verfahren zusätzlich zumindest einen der folgenden Schritte umfasst:
c) Laden oder Entladen der Batteriezelle (1) über den ersten Stromanschluss (11) und den vierten Stromanschluss (14); oder
d) Laden oder Entladen der Batteriezelle (1) über den zweiten Stromanschluss (12) und den vierten Stromanschluss (14).

9. Batterieanordnung (20), zumindest umfassend mindestens eine Batteriezelle (1) nach einem der vorhergehenden Patentansprüche 1 bis 6, einen Stromkreis (15) sowie ein Steuergerät (21), das zur Durchführung eines Verfahrens nach einem der vorhergehenden Patentansprüche 7 und 8 eingerichtet ist, wobei durch das Steuergerät (21) der Stromkreis (15) über die jeweiligen Stromanschlüsse (11, 12, 13, 14) schaltbar schließbar ist.

10. Kraftfahrzeug (22), zumindest umfassend eine Batterieanordnung (20) nach Patentanspruch 9 und einen Traktionsantrieb (23) zum Antrieb des Kraftfahrzeuges (22), wobei der Traktionsantrieb (23) durch die mindestens eine Batteriezelle (1) mit Energie versorgbar ist.
